# EUROPEAN PATENT APPLICATION

(11) **EP 4 429 397 A1**
(43) Date of publication of application: **11.09.2024**
(21) Application number: 21962983.9
(22) Date of filing: 05.11.2021
(51) Int. Cl.: H04W 76/27

(54) **METHOD FOR DETERMINING POSITION INFORMATION OF TERMINAL DEVICE, AND APPARATUS THEREFOR**

(71) Applicant: Beijing Xiaomi Mobile Software Co., Ltd., Beijing 100085 (CN)
(72) Inventor: ZHU, Yajun, Beijing 100085 (CN)
(74) Representative: Stöckeler, Ferdinand
(86) International application number: PCT/CN2021/129131
(87) International publication number: WO 2023/077470

(57) **Abstract**

The embodiments of the present disclosure can be applied to the technical field of communications. Disclosed are a method for determining the position of a terminal device, and an apparatus therefor. The method, which is executed by a terminal device, comprises: sending indication information, wherein the indication information is used for indicating information of the time when position information of the terminal device is available. Thus, a network device and a terminal device can keep consistent understanding of information of the time when position information of the terminal device is available, such that a conflict between the positioning process of the terminal device and the scheduling of the network device is prevented, thereby ensuring the reliability of terminal uplink synchronization.

## Description

### TECHNICAL FIELD

The disclosure relates to a field of communication technologies, and more particularly to a method and an apparatus for determining position information of a terminal.

### BACKGROUND

With the continuous development of Internet of Things applications, there is a growing requirement for accuracy of position information of a terminal in a complex scene where everything is connected.

In the related art, in a scene of satellite communication, the terminal may determine its position information by perform positioning based on a global navigation satellite system (GNSS), to perform compensation for uplink synchronization. Meanwhile, a network device may also perform service scheduling on the terminal as needed. When a positioning process of the terminal coincides with a scheduling process of the network device, a problem of interference in uplink transmission of the terminal may occur. Therefore, how to avoid a conflict between the positioning process of the terminal and the scheduling process of the network device is an urgent problem to be solved at present.

### SUMMARY

Embodiments of the disclosure provide a method and an apparatus for determining position information of a terminal. Position information of the terminal can be determined based on indication information, thereby improving an accuracy of determining the position information of the terminal.

In a first aspect, embodiments of the disclosure provide a method for determining position information of a terminal. The method is executed by the terminal. The method includes: sending, by the terminal, indication information which indicating time information during which position information of the terminal is fixed.

In the disclosure, the terminal sends the time information for indicating that the position information of the terminal is fixed to the network device, such that the network device and the terminal keep a consistent understanding of the time information during which the position information of the terminal is fixed, thereby avoiding a conflict between a positioning process of the terminal and scheduling of the network device and ensuring a reliability of uplink synchronization of the terminal.

Alternatively, the method further includes:
sending the indication information when a preset condition is met.

The preset condition includes any one of:
a change value of a duration during which the position information of the terminal is fixed being greater than a first threshold; and
a change value of a moving speed of the terminal being greater than a second threshold.

Alternatively, the method further includes:
sending the indication information at each preset moment.

Alternatively, the method further includes:
determining each preset moment based on end time information of the position information of the terminal being fixed; or
determining the preset moment based on a moment when the terminal obtains the position information.

Alternatively, the indication information includes at least one of:
a duration during which the position information is fixed;
start time information of the position information being fixed; and
end time information of the position information being fixed.

In a second aspect, embodiments of the disclosure provide another method for determining position information of a terminal. The method is executed by a network device. The method includes: receiving, by a network device, indication information which indicating time information during which position information of the terminal is fixed.

In the disclosure, the network device receives the time information for indicating that the position information of the terminal is fixed sent by the terminal, such that the network device and the terminal keep the consistent understanding of the time information during which the position information of the terminal is fixed, thereby avoiding the conflict between the positioning process of the terminal and the scheduling of the network device and ensuring the reliability of the uplink synchronization of the terminal.

Alternatively, the indication information includes at least one of:
a duration of during which the position information is fixed;
start time information of the position information being fixed; and
end time information of the position information being fixed.

In a third aspect, embodiments of the disclosure provide a communication device at a terminal side, including:
a transceiver module, configured to send indication information by a terminal, the indication information indicating time information during which position information of the terminal is fixed.

Alternatively, the transceiver module is configured to:
send the indication information when a preset condition is met.

The preset condition includes any one of:
a change value of a duration during which the position information of the terminal is fixed being greater than a first threshold; and
a change value of a moving speed of the terminal being greater than a second threshold.

Alternatively, the transceiver module is configured to:
send the indication information at each preset moment.

Alternatively, the communication device also includes:
a processing module, configured to determine each preset moment based on end time information of the position information of the terminal being fixed; or
configured to determine the preset moment based on a moment when the terminal obtains the position information.

Alternatively, the indication information includes at least one of:
a duration during which the position information is fixed;
start time information of the position information being fixed; and
end time information of the position information being fixed.

In a fourth aspect, embodiments of the disclosure provide a communication device at a network device side, including:
a transceiver component, configured to receive indication information by the network device, the indication information indicating time information during which position information of the terminal is fixed.

Alternatively, the indication information includes at least one of:
a duration during which the position information is fixed;
start time information of the position information being fixed; and
end time information of the position information being fixed.

In a fifth aspect, embodiments of the disclosure provide a communication device. The communication device includes a processor. When the processor calls a computer program stored in a memory, the method according to the first aspect is performed.

In a sixth aspect, embodiments of the disclosure provide a communication device. The communication device includes a processor. When the processor calls a computer program stored in a memory, the method according to the second aspect is performed.

In a seventh aspect, embodiments of the disclosure provide a communication device. The communication device includes a processor and a memory. The memory is configured to store a computer program. The processor executes the computer program stored in the memory, to enable the communication device to execute the method according to the first aspect.

In an eighth aspect, embodiments of the disclosure provide a communication device. The communication device includes a processor and a memory. The memory is configured to store a computer program. The processor executes the computer program stored in the memory, to enable the communication device to execute the method according to the second aspect.

In a ninth aspect, embodiments of the disclosure provide a communication device. The communication device includes a processor and an interface circuit. The interface circuit is configured to receive code instructions and to transmit the code instructions to the processor. The processor is configured to run the code instructions, to enable the communication device to execute the method according to the first aspect.

In a tenth aspect, embodiments of the disclosure provide a communication device. The communication device includes a processor and an interface circuit. The interface circuit is configured to receive code instructions and to transmit the code instructions to the processor. The processor is configured to run the code instructions, to enable the communication device to execute the method according to the second aspect.

In an eleventh aspect, embodiments of the disclosure provide a system for determining position information of a terminal. The system includes the communication device according to the third aspect and the communication device according to the fourth aspect. Alternatively, the system includes the communication device according to the fifth aspect and the communication device according to the sixth aspect. Alternatively, the system includes the communication device according to the seventh aspect and the communication device according to the eighth aspect. Alternatively, the system includes the communication device according to the ninth aspect and the communication device according to the tenth aspect.

In a twelfth aspect, embodiments of the disclosure provide a computer readable storage medium, configured to store instructions used by the above terminal. The terminal is caused to execute the method according to the first aspect when the instructions are executed.

In a thirteenth aspect, embodiments of the disclosure provide a readable storage medium, configured to store instructions used by the above network device. The network device is caused to execute the method according to the second aspect when the instructions are executed.

In a fourteenth aspect, the disclosure also provides a computer program product including a computer program. A computer is caused to perform the method according to the first aspect when the computer program is run in the computer.

In a fifteenth aspect, the disclosure also provides a computer program product including a computer program. A computer is caused to perform the method according to the second aspect when the computer program is run in the computer.

In a sixteenth aspect, the disclosure provides a chip system. The chip system includes at least one processor and an interface, configured to support a terminal to realize functions involved in the first aspect, such as determining or processing at least one of data and information involved in the above method. In a possible design, the chip system also includes a memory. The memory is configured to store a computer program and data necessary for the terminal. The chip system may be composed of a chip, and may also include the chip and other discrete components.

In a seventeenth aspect, the disclosure provides a chip system. The chip system includes at least one processor and an interface, configured to support a network device to realize functions involved in the second aspect, such as determining or processing at least one of data and information involved in the above method. In a possible design, the chip system also includes a memory. The memory is configured to store a computer program and data necessary for the network device. The chip system may be composed of a chip, and may also include the chip and other discrete components.

In an eighteenth aspect, the disclosure provides a computer program. A computer is caused to execute the method according to the first aspect when the computer program runs in the computer.

In a nineteenth aspect, the disclosure provides a computer program. A computer is caused to execute the method according to the second aspect when the computer program runs in the computer.

### BRIEF DESCRIPTION OF THE DRAWINGS

In order to clearly illustrate the technical solution in embodiments of the disclosure or the background technologies, a description will be made below to accompanying drawings used in the embodiments of the disclosure or the background technologies.
FIG. 1 is a structure schematic diagram illustrating a communication system according to an embodiment of the disclosure.
FIG. 2 is a flow chart illustrating a method for determining position information of a terminal according to an embodiment of the disclosure.
FIG. 3 is a flow chart illustrating a method for determining position information of a terminal according to another embodiment of the disclosure.
FIG. 4 is a flow chart illustrating a method for determining position information of a terminal according to another embodiment of the disclosure.
FIG. 5 is a flow chart illustrating a method for determining position information of a terminal according to another embodiment of the disclosure.
FIG. 6 is a flow chart illustrating a method for determining position information of a terminal according to another embodiment of the disclosure.
FIG. 7 is a block diagram illustrating a communication device according to an embodiment of the disclosure.
FIG. 8 is a block diagram illustrating a communication device according to another embodiment of the disclosure.
FIG. 9 is a block diagram illustrating a chip according to an embodiment of the disclosure.

### DETAILED DESCRIPTION

In order to facilitate understanding, the terms involved in the disclosure are introduced first.

### 1. Global navigation satellite system (GNSS)

The global navigation satellite system (GNSS) refers to all satellite navigation systems, including global, regional and enhanced satellite navigation systems such as the Global Positioning System (GPS) of America, the Global Navigation Satellite System (GLONASS) of Russia, the Galileo of Europe, the Beidou satellite navigation system of China, and related enhanced systems such as the wide area augmentation system (WAAS) of America, the European geostationary navigation overlay service (EGNOS) of Europe and the multifunctional transportation satellite augmentation system (MSAS) of Japan, and also including other satellite navigation systems under construction and to be built in the future.

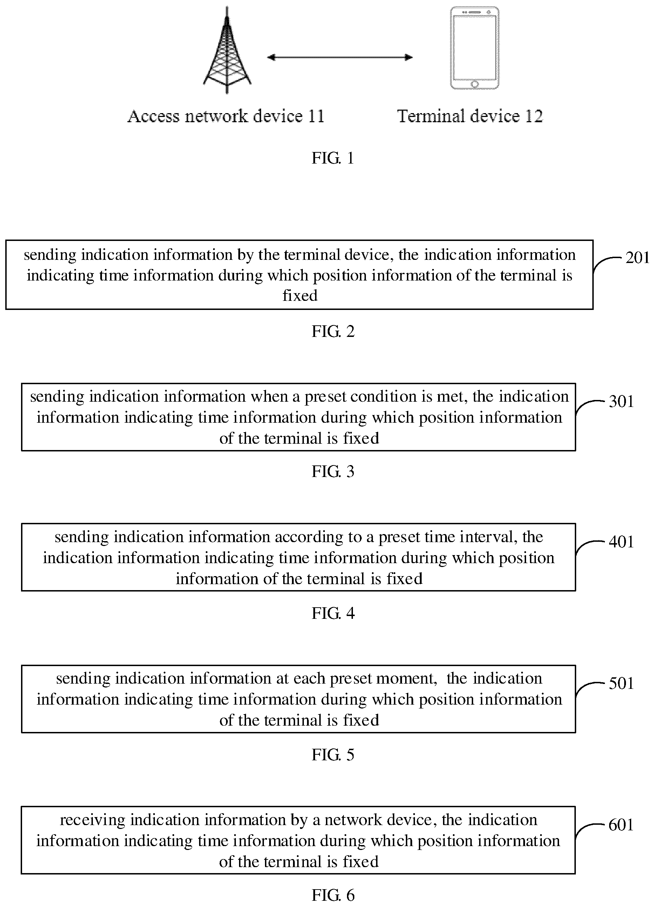

With reference to FIG. 1, FIG. 1 is a structure schematic diagram illustrating a communication system according to an embodiment of the disclosure. The communication system may include, but be not limited to, a network device and a terminal. The number of devices and forms of the devices illustrated in FIG. 1 are only for examples and do not constitute a limitation to embodiments of the disclosure. In a practical application, two or more network devices and two or more terminals may be included. The communication system illustrated in FIG. 1 may include, for example, a network device 11 and a terminal 12.

It should be noted that, the technical solution of embodiments of the disclosure may be applied to various communication systems, such as: a long term evolution (LTE) system, a 5^{th} generation (5G) mobile communication system, a 5G new radio (NR) system, or other future new mobile communication systems.

The network device 11 in embodiments of the disclosure is an entity at a network side for transmitting or receiving signals. For example, the network device 101 may be an evolved NodeB (eNB), a transmission reception point (TRP), a next generation NodeB (gNB) in the NR system, a base station in other future mobile communication systems or an access node in a wireless fidelity (Wi-Fi^{™}) system. A specific technology and a specific device form employed by the network device are not limited in embodiments of the disclosure. The network device provided by embodiments of the disclosure may be composed of a central unit (CU) and distributed units (DUs). The CU may also be called a control unit. A protocol layer of the network device, such as the base station, may be separated by employing a CU-DU structure, with functions of some protocol layers are placed in the CU for centralized control, and functions of some or all remaining protocol layers distributed in the DUs. The DUs are controlled centrally by the CU.

The terminal 12 in embodiments of the disclosure is an entity at a user side for receiving or transmitting signals, such as a mobile phone. The terminal may also be called a terminal device, a user equipment (UE), a mobile station (MS), a mobile terminal (MT) or the like. The terminal may be a car with a communication function, a smart car, a mobile phone, a wearable device, a Pad, a computer with a wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in a smart city, a wireless terminal in a smart home, etc. A specific technology and a specific device form employed by the terminal are not limited in embodiments of the disclosure.

It may be understood that, the communication system described in the embodiments of the disclosure is intended to explain the technical solution of the embodiments of the disclosure more clearly, and does not constitute a limitation on the technical solution provided by embodiments of the disclosure. Those skilled in the art may know that, with evolution of a system architecture and appearance of new service scenes, the technical solution provided by embodiments of the disclosure is also applicable for similar technical problems.

Generally, a duration in which position information determined by the terminal through the GNSS is available is related to the terminal itself. Therefore, the terminal side and the network device side may keep a consistent understanding of time information in which the position information of the terminal is available, to avoid a conflict between a positioning process of the terminal and scheduling of the network device. That is, the network device may schedule the terminal when the position information of the terminal is available, and the network device stops scheduling the terminal when the terminal needs to perform positioning using the GNSS. Detailed description will be made below to a method and an apparatus for determining position information of a terminal provided by the disclosure with reference to accompanying drawings.

Referring to FIG. 2, FIG. 2 is a flow chart illustrating a method for determining position information of a terminal according to an embodiment of the disclosure. The method is executed by the terminal. As illustrated in FIG. 2, the method may include, but not limited to, the following steps.

Step 201, indication information is sent by the terminal, the indication information is configured to indicate time information during which position information of the terminal is fixed.

It should be noted that, the position information in the disclosure may be position information determined by the terminal based on the GNSS. That is, the position information of the terminal being fixed may also be called as that a GNSS position of the terminal is fixed. The position information of the terminal being fixed means that the position information of the terminal is effective and a network device may communicate with the terminal based on the position information.

In the disclosure, the indication information may include: a duration during which the position information is fixed; start time information of the position information being fixed; end time information of the position information being fixed, or the like, which is not limited in the disclosure.

It should be noted that, the duration during which the position information is fixed may be configured to identify an effective duration of the position information. The position information is invalid beyond the duration. The start time information of the position information being fixed may be configured to identify a time point when the position information takes effect. The end time information of the position information being fixed may be configured to identify a time point when the position information is invalid.

In addition, the time information during which the position information is fixed may be determined by the terminal system based on a hardware situation and a moving speed of the terminal system. For example, when the terminal moves fast and a position change of the terminal is small, a duration during which the position information is fixed is relatively long. When the terminal moves slowly and the position of the terminal changes greatly, the duration during which the position information is fixed is relatively short.

In the disclosure, the terminal may determine the time information during which the position information is fixed based on determination of a hardware situation and a moving speed of the terminal after determining current position information, and send the time information during which the position information is fixed to the network device through the indication information. The network device may analyze the indication information after receiving the indication information, to determine the time information during which the position information of the terminal is fixed, and then the network device may determine when the position information of the terminal is invalid based on the time information.

In the disclosure, the terminal sends the time information for indicating that the position information of the terminal is fixed to the network device, such that the network device and the terminal keep a consistent understanding of the time information during which the position information of the terminal is fixed, thereby avoiding a conflict between a positioning process of the terminal and the scheduling of the network device and ensuring the reliability of uplink synchronization of the terminal.

Referring to FIG. 3, FIG. 3 is a flow chart illustrating a method for determining position information of a terminal according to an embodiment of the disclosure. The method is executed by the terminal. As illustrated in FIG. 3, the method may include, but not limited to the following steps.

Step 301, indication information is sent when a preset condition is met. The indication information is configured to indicate time information during which position information of the terminal is fixed.

A form of the indication information and contents included therein may refer to the detailed description of any embodiment of the disclosure, which is not elaborated herein.

Alternatively, the indication information may be sent when a change value of a duration during which the position information of the terminal is fixed is greater than a first threshold.

The first threshold may be a maximum amount of change allowed for the duration during which the position information is fixed. When the change value of the duration is too large, uplink transmission may be interfered when the network device still determines a duration during which current position information is fixed based on a previous duration. Therefore, the duration during which the position information of the terminal is fixed may be updated. For example, a previous duration during which the position information is fixed is ls, a following duration during which the position information is fixed is 0.5s, and the first threshold value is 0.1s. The change value 0.5s of the duration during which the position information is fixed is greater than the first threshold value 0.1s. In this case, the terminal may send a latest duration during which the position information is fixed to the network device.

In the disclosure, the terminal may calculate the moving speed of the terminal by monitoring its own position in real time, and determine the duration during which the position information of the terminal is fixed based on its own moving speed. Then, a change value between the determined duration during which the position information is fixed and the previous duration during which the position information is fixed is calculated, and the change value is compared with the first threshold. The indication information may be sent to the network device in case that the change value is greater than the first threshold.

Alternatively, the terminal may not send the indication information to the network device in case that the change value is lower than the first threshold, and the network device determines that the time information during which the position information of the terminal is fixed does not change.

Alternatively, the terminal may also send the indication information to the network device in case that a change value of the moving speed of the terminal is greater than a second threshold.

The second threshold may be a maximum amount of change allowed for the moving speed. When the change value of the moving speed is too large, a duration during which the position information determined at a previous moving speed may no longer be suitable to a duration during which the position information corresponding to a current moving speed. Thus, the terminal may send a duration during which the current position information is fixed to the network device. For example, a moving speed in a previous duration is 2m/s, a current moving speed is 20m/s, and the second threshold is 2m/s. The changing value of the moving speed of the terminal is 18m/s, which is greater than the second threshold. In this case, the terminal may send a latest duration during which the position information is fixed to the network device.

In the disclosure, the terminal may calculate the moving speed of the terminal by monitoring its own position in real time, calculate the change value of the moving speed, and compare the change value with the second threshold. The terminal may send the indication information to the network device in case that the change value is greater than the second threshold.

Alternatively, the terminal may not send the indication information to the network device in case that the change value of the moving speed of the terminal is lower than the first threshold, and then the network device may determine that the time information during which the position information of the terminal is fixed does not change.

In the disclosure, the terminal may send the time information during which the position information is fixed to the network device in case that the preset condition is met, and the network device may update the time information during which the position information of the terminal is fixed based on received information. Through this operation, the network device and the terminal may keep the consistent understanding of the time information during which the position information of the terminal is fixed, avoiding the conflict between the positioning process of the terminal and the scheduling of the network device, and reducing network resources occupied by sending data while ensuring the reliability of the uplink synchronization of the terminal.

Referring to FIG. 4, FIG. 4 is a flow chart illustrating a method for determining position information of a terminal according to an embodiment of the disclosure. The method is executed by the terminal. As illustrated in FIG. 4, the method may include, but not limited to, the following steps.

Step 401, indication information is sent according to a preset time interval. The indication information is configured to indicate time information during which position information of the terminal is fixed.

A form of the indication information and contents included therein may refer to the detailed description of any embodiment of the disclosure, which is not elaborated herein. Alternatively, the terminal may determine the preset time interval based on a duration during which the position information of the terminal is fixed.

In a practical application, after determining the duration during which the position information is fixed, the terminal may determine the duration as the preset time interval, and then the indication information may be sent according to the preset time interval.

In addition, when the terminal determines that the duration during which the position information is fixed changes in a process of monitoring the position of the terminal, the terminal may also update the preset time interval, to ensure that the position information determined by the terminal is consistent with that determined by the network device.

For example, after obtaining position information at a current moment, the terminal may calculate a moving speed at the current moment. In case that the moving speed changes, the terminal may determine a duration during which the position information of the terminal is fixed based on the moving speed, and update the preset time interval with the duration. Then, the terminal may send the indication information based on preset time interval.

Alternatively, the terminal may determine the preset time interval based on a cycle of obtaining the position information.

In a practical application, the terminal may obtain the position information based on a hardware situation and the moving speed of the terminal at a certain cycle. Therefore, the cycle of obtaining the position information may be determined as the preset time interval, and then the indication information may be sent based on the preset time interval.

In the disclosure, the terminal may send the time information during which the position information is fixed to the network device according to the preset time interval, and then the network device may update the time information during which the position information of the terminal is fixed based on received information. Through this operation, the network device and the terminal may keep the consistent understanding of the time information during which the position information of the terminal is fixed, avoiding a conflict between a positioning process of the terminal and the scheduling of the network device, and reducing the network resources occupied by sending data while ensuring the reliability of the uplink synchronization of the terminal.

Referring to FIG. 5, FIG. 5 is a flow chart illustrating a method for determining position information of a terminal according to an embodiment of the disclosure. The method is executed by the terminal. As illustrated in FIG. 5, the method may include, but not limited to, the following steps.

Step 501, indication information is sent at each preset moment. The indication information is configured to indicate time information during which position information of the terminal is fixed.

Alternatively, the terminal may determine each preset moment based on end time information of the position information of the terminal being fixed.

In the disclosure, the terminal may send the indication information to the network device until the position information is invalid. Therefore, a certain moment before an end moment of the duration during which the position information is fixed may be determined as a preset moment.

Alternatively, the preset moment is determined based on a moment when the terminal obtains the position information.

In the disclosure, the terminal may send the indication information to the network device when obtaining the position information. Therefore, a certain moment after the moment when the position information is obtained may be determined as the preset moment.

In the disclosure, the terminal may send the time information during which the position information is fixed to the network device at every preset moment, and the network device may update the time information during which the position information of the terminal is fixed based on received information. Through this operation, the network device and the terminal may keep the consistent understanding of the time information during which the position information of the terminal is fixed, avoiding a conflict between a positioning process of the terminal and the scheduling of the network device, and further reducing the network resources occupied by sending data while ensuring the reliability of the uplink synchronization of the terminal.

Referring to FIG. 6, FIG. 6 is a flow chart illustrating a method for determining position information of a terminal according to an embodiment of the disclosure. The method is executed by a network device. As illustrated in FIG. 6, the method may include, not limited to, the following steps.

Step 601, indication information is received by the network device, the indication information indicating time information during which position information of the terminal is fixed.

The indication information may include: a duration during which the position information is fixed; or start time information of the position information being fixed; end time information of the position information being fixed, or the like, which is not limited in the disclosure.

It should be noted that, the duration during which the position information is fixed may be configured to identify an effective duration of the position information, and the position information is invalid beyond the duration. The start time information of the position information being fixed may be configured to identify a time point when the position information takes effect. The end time information of the position information being fixed may be configured to identify a time point when the position information is invalid.

In addition, the indication information may be determined by a terminal system based on a hardware situation and a moving speed of the terminal system. For example, terminal moves slowly, the duration during which the position information of the terminal is fixed is relatively long. When terminal moves fast, the duration during which the position information is fixed is relatively short.

In the disclosure, the terminal may determine the time information during which the position information is fixed based on determination of a hardware situation and a moving speed of the terminal after determining current position information, and send the time information during which the position information is fixed to the network device through the indication information. The network device may analyze the indication information after receiving the indication information, to determine the time information during which the position information of the terminal is fixed, and then the network device may determine when the position information of the terminal is invalid based on the time information.

In the disclosure, the network device receives the time information for indicating that the position information of the terminal is fixed sent by the terminal, such that the network device and the terminal keep a consistent understanding of the time information during which the position information of the terminal is fixed, thereby avoiding a conflict between a positioning process of the terminal and the scheduling of the network device and ensuring the reliability of the uplink synchronization of the terminal.

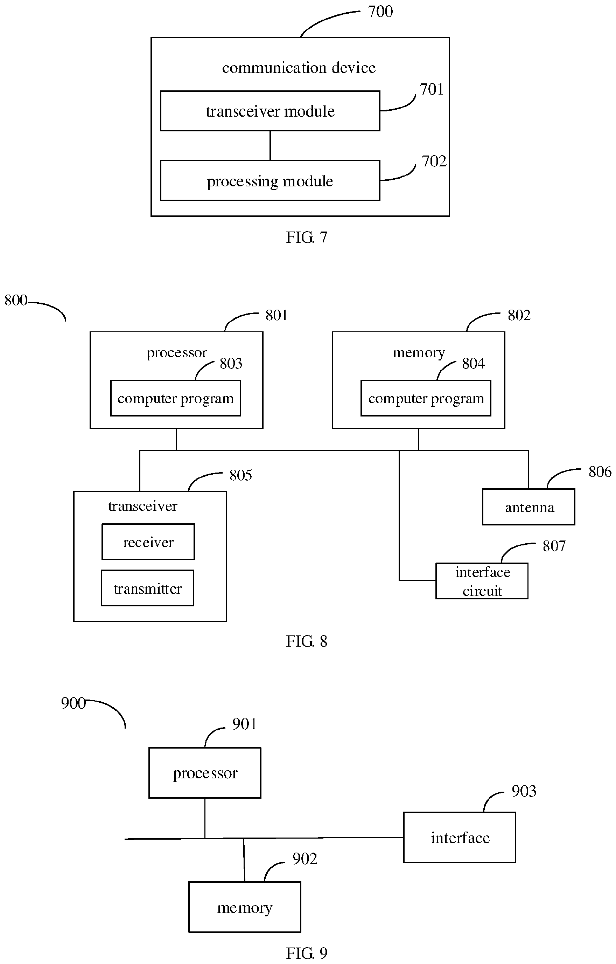

Referring to FIG. 7, FIG. 7 is a block diagram illustrating a communication device 700 according to an embodiment of the disclosure. The communication device 700 illustrated in FIG. 7 may include a transceiver module 701 and a processing module 702. The transceiver module 701 may include a sending module and/or a receiving module. The sending module is configured to realize a sending function, and the receiving module is configured to realize a receiving function. The transceiver module 701 may realize the sending function and/or the receiving function.

It may be understood that the communication device 700 may be a terminal or a component in the terminal, and may also be a device that may be used in matching with the terminal.

The communication device 700 is at the terminal side.

The transceiver module 701 is configured to send indication information by the terminal. The indication information is configured to indicate time information during which position information of the terminal is fixed.

Alternatively, the transceiver module 701 is configured to:
send the indication information in case that a preset condition is met.

The preset condition includes any one of:
a change value of a duration during which the position information of the terminal is fixed being greater than a first threshold; and
a change value of a moving speed of the terminal being greater than a second threshold.

Alternatively, the transceiver module 701 is configured to:
send the indication information at each preset moment.

Alternatively, the communication device also includes:
the processing module 702, configured to determine each preset moment based on end time information of the position information of the terminal being fixed; or
the processing module 702 is configured to determine the preset moment based on a moment when the terminal obtains the position information.

Alternatively, the indication information includes at least one of:
a duration during which the position information is fixed;
start time information of the position information being fixed; and
end time information of the position information being fixed.

It may be understood that, the communication device 700 may be a network device, a component in the network device, or a device that may be used in matching with the network device.

The communication device 700 is at a network device side.

The transceiver module 701 is configured to receive indication information by the network device. The indication information is configured to indicate time information during which position information of the terminal is fixed.

Alternatively, the indication information includes at least one of:
a duration during which the position information is fixed;
start time information of the position information being fixed; and
end time information of the position information being fixed.

In the communication device provided by the disclosure, the terminal sends the time information for indicating that the position information of the terminal is fixed to the network device, such that the network device and the terminal keep a consistent understanding of the time information during which the position information of the terminal is fixed, thereby avoiding the conflict between the positioning process of the terminal and the scheduling of the network device and ensuring the reliability of the uplink synchronization of the terminal.

Referring to FIG. 8, FIG. 8 is a block diagram illustrating a communication device 700 according to another embodiment of the disclosure. The communication device 800 may be a network device, may be a terminal, may also be a chip, a chip system, or a processor for supporting the network device to realize the above method, or may also a chip, a chip system, or a processor for supporting the terminal to realize the above method. The communication device may be configured to realize the method according to the above method embodiments. For details, reference may be made to the description in the above method embodiments.

The communication device 800 may include one or more processors 801. The processor 801 may be a general-purpose processor, a dedicated processor or the like, such as a baseband processor or a central processor. The baseband processor may be configured to process a communication protocol and communication data. The central processor may be configured to control a communication device (such as a base station, a baseband chip, a terminal, a terminal chip, a DU or a CU, etc.), execute a computer program, and process data of the computer program.

Alternatively, the communication device 800 may also include one or more memories 802 having a computer program 804 stored thereon. The processor 801 is configured to execute the computer program 804, to enable the communication device 800 to execute the method according to the above method embodiments. Alternatively, the memory 802 may also have data stored thereon. The communication device 800 and the memory 802 may be set separately or integrated together.

Alternatively, the communication device 800 may further include a transceiver 805 and an antenna 806. The transceiver 805 may be called a transceiver unit, a transceiver, a transceiver circuit, etc., and is configured to realize a receiving and sending function. The transceiver 805 may include a receiver and a transmitter. The receiver may be called a receiving machine, a receiving circuit, or the like, and configured to realize a receiving function. The transmitter may be called a transmitting machine, a transmitting circuit, or the like, and is configured to realize a sending function.

Alternatively, the communication device 800 may further include one or more interface circuits 807. The interface circuit 807 is configured to receive code instructions and transmit the code instructions to the processor 801. The processor 801 is configured to execute the code instructions to enable the communication device 800 to execute the method according to the above method embodiments.

The communication device 800 is the terminal, and the processor 801 is configured to execute the step 401 in FIG. 4.

The communication device 800 is the network device, and the transceiver 805 is configured to execute the step 501 in FIG. 5.

In an implementation, the processor 801 may include a transceiver for realizing the receiving and sending function. For example, the transceiver may be a transceiver circuit, an interface, or an interface circuit. The transceiver circuit, the interface or the interface circuit for realizing the receiving and sending function may be separated or integrated. The transceiver circuit, interface or interface circuit may be configured to read and write codes/data, or the transceiver circuit, interface or interface circuit may be configured to signal transmission or delivery.

In an implementation, the processor 801 may store a computer program 803. The computer program 803 runs on the processor 801, to enable the communication device 800 to execute the method according to the above method embodiments. The computer program 803 may be solidified in the processor 801. In this case, the processor 801 may be implemented by hardware.

In an implementation, the communication device 800 may include a circuit. The circuit may realize the sending, receiving or communicating function in the above method embodiments. The processor and transceiver described in the disclosure may be implemented in an integrated circuit (IC), an analog IC, a radio frequency integrated circuit (RFIC), a mixed-signal IC, an application specific integrated circuit (ASIC), a printed circuit board (PCB), an electronic device, and the like. The processor and the transceiver may also be manufactured by various IC process technologies, such as a complementary metal oxide semiconductor (CMOS), a n-metal oxide semiconductor (NMOS), a positive channel metal oxide semiconductor (PMOS), a bipolar junction transistor (BJT), a bipolar CMOS(BiCMOS), a silicon germanium (SiGe), a gallium arsenide (GaAs), etc.

The communication device described in the above embodiments may be the network device or an access network device (such as the terminal in the above method embodiments), but the scope of the communication device described in the disclosure is not limited thereto, a structure of the communication device may not be limited by FIG. 8. The communication device may be a stand-alone device or may be a part of a larger device. For example, the communication device may be:
(1) an independent integrated circuit IC, the chip, the chip system or subsystem;
(2) a set with one or more ICs, alternatively, the IC set may also include storage components for storing data and the computer program;
(3) an ASIC, such as a modem;
(4) a module that may be embedded in other devices;
(5) the receiver, the terminal, the intelligent terminal, a cellular phone, a wireless device, a handset, a mobile unit, a vehicle-mounted device, a network device, a cloud device, an artificial intelligence device, etc.
(6) others and so on.

For a case that the communication device may be the chip or the chip system, reference may be made to a block diagram of the chip illustrated in FIG. 9. The chip illustrated in FIG. 9 includes a processor 901 and an interface 903. There may be one or more processors 901, and there may be multiple interfaces 903.

For a case where the chip is configured to realize the function of the terminal in embodiments of the disclosure:
the interface 903 is configured to execute the step 201 in FIG. 2; the step 301 in FIG. 3; or the step 401 in FIG. 4.

For a case where the chip is configured to realize the function of the network device in embodiments of the disclosure:
the interface 903 is configured to execute the step 501 in FIG. 5.

Alternatively, the chip also includes a memory 903. The memory 903 is configured to store a necessary computer program and data.

Those skilled in the art may also understand that various illustrative logical blocks and steps listed in embodiments of the disclosure may be realized by electronic hardware, computer software, or a combination of both. Whether such function is realized by hardware or software depends on a specific application and a design requirement of a whole system. Those skilled in the art may use various methods to realize the described functions for each specific application, but such realization should not be understood as beyond the protection scope of embodiments of the disclosure.

The disclosure also provides a readable storage medium having instructions stored thereon. The instructions are executed by a computer to realize the function of any of the above method embodiments.

The disclosure also provides a computer program product. The computer program product is executed by the computer to realize the function of any of the above method embodiments.

The above embodiments may be realized in whole or in part by software, hardware, firmware or any combination thereof. When implemented using software, the above embodiments may be implemented, in whole or in part, in the form of the computer program product. The computer program product includes one or more computer programs. When loading and executing the computer program on the computer, all or part of processes or functions described in the embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., using coaxial cables, fiber optics, or digital subscriber lines (DSLs)) or a wireless manner (e.g., using infrared wave, wireless wave, or microwave). The computer-readable storage medium may be any usable medium to which the computer is capable to access or a data storage device such as a server integrated by one or more usable mediums and a data center. The available medium may be a magnetic medium (e.g., a floppy disk, a hard disk, a magnetic tape), an optical medium (e.g., a high-density digital video disc (DVD)), or a semiconductor medium (e.g., a solid state disk (SSD)) and the like.

Those skilled in the art understands that the first, second, and other various numerical numbers involved in the disclosure are only described for the convenience of differentiation, and are not used to limit the scope of the embodiments of the disclosure, and not to indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D", are used to distinguish different technical features of the type, the technical features described using the "first", "second", and "third", and "A", "B", "C" and "D", do not indicate any order of precedence or magnitude.

The correspondences shown in the tables in the disclosure can be configured or predefined. The values of information in each table are only examples and can be configured to other values, which are not limited by this disclosure. When configuring the correspondence between information and various parameters, it is not necessary to configure all the correspondence shown in each table. For example, in the tables in the disclosure, some correspondence relationships shown in certain rows may not be configured. For example, appropriate deformation adjustments can be made based on the above table, such as splitting, merging, etc. The names of the parameters shown in the titles of the above tables can also use other names that can be understood by the communication device, and the values or representations of the parameters can be other values or representations that can be understood by the communication device. When implementing the above tables, other data structures can be used, such as arrays, queues, containers, stacks, linear tables, pointers, linked lists, trees, graphs, structures, classes, heaps, hash lists, or hash tables.

The term "predefine" in this disclosure may be understood as define, pre-define, store, pre-store, pre-negotiate, pre-configure, solidify, or pre-fire.

Those skilled in the art may realize that the units and steps of the various examples described in combination with the embodiments disclosed herein are capable of being implemented in the form of electronic hardware, or a combination of computer software and electronic hardware. Whether these functions are performed in hardware or software depends on the particular application and design constraints of the technical solution. Those skilled in the art may use different methods to implement the described functions for each particular application, but such implementations should not be considered as beyond the scope of the disclosure.

It is clearly understood by those skilled in the art that, for the convenience and brevity of description, the specific working processes of the systems, apparatuses, and units described above can be referred to the corresponding processes in the preceding method embodiments, and will not be repeated herein.

The above implementations are only specific implementations of the disclosure, but the scope of protection of the disclosure is not limited thereto. Those skilled in the art familiar to this technical field can easily think of changes or substitutions in the technical scope disclosed by the disclosure, which shall be covered by the scope of protection of the disclosure. Therefore, the scope of protection of the disclosure shall be governed by the scope of protection of the stated claims.

## Claims

1. A method for determining position information of a terminal, comprising:
sending, by the terminal, indication information which indicating time information during which position information of the terminal is fixed.

2. The method of claim 1, wherein sending the indication information comprises:
sending the indication information when a preset condition is met;
wherein the preset condition comprises any one of:
a change value of a duration during which the position information of the terminal is fixed being greater than a first threshold; and
a change value of a moving speed of the terminal being greater than a second threshold.

3. The method of claim 1, wherein sending the indication information comprises:
sending the indication information at each preset moment.

4. The method of claim 3, further comprising:
determining each preset moment based on end time information of the position information of the terminal being fixed; or
determining the preset moment based on a moment when the terminal obtains the position information.

5. The method of any of claims 1 to 4, wherein the indication information comprises at least one of:
a duration during which the position information is fixed;
start time information of the position information being fixed; and
end time information of the position information being fixed.

6. A method for determining position information of a terminal, comprising:
receiving, by a network device, indication information which indicating time information during which position information of the terminal is fixed.

7. The method of claim 6, wherein the indication information comprises at least one of:
a duration during which the position information is fixed;
start time information of the position information being fixed; and
end time information of the position information being fixed.

8. A communication device, comprising:
a transceiver module, configured to send indication information by a terminal, wherein the indication information indicates time information during which position information of the terminal is fixed.

9. The communication device of claim 8, wherein the transceiver module is configured to:
send the indication information when a preset condition is met;
wherein the preset condition comprises any one of:
a change value of a duration during which the position information of the terminal is fixed being greater than a first threshold; and
a change value of a moving speed of the terminal being greater than a second threshold.

10. The communication device of claim 8, wherein the transceiver module is configured to:
send the indication information at each preset moment.

11. The communication device of claim 10, further comprising:
a processing module, configured to determine each preset moment based on end time information of the position information of the terminal being fixed; or
configured to determine the preset moment based on a moment when the terminal obtains the position information.

12. The communication device of any of claims 8 to 11, wherein the indication information comprises at least one of:
a duration during which the position information is fixed;
start time information of the position information being fixed; and
end time information of the position information being fixed.

13. A communication device, comprising:
a transceiver component, configured to receive indication information by a network device, wherein the indication information indicates time information during which position information of a terminal is fixed.

14. The communication device of claim 13, wherein the indication information comprises at least one of:
a duration during which the position information is fixed;
start time information of the fixed position information being fixed; and
end time information of the fixed position information being fixed.

15. A communication device, comprising a processor and a memory having a computer program stored thereon, wherein the processor executes the computer program stored in the memory, to enable the communication device to execute the method according to any of claims 1 to 5.

16. A communication device, comprising a processor and a memory having a computer program stored thereon, wherein the processor executes the computer program stored in the memory, to enable the communication device to execute the method according to any of claims 6 to 7.

17. A computer readable storage medium storing instructions that, when the instructions are executed, the method according to any of claims 1 to 5 is implemented.

18. A computer readable storage medium storing instructions that, when the instructions are executed, the method according to any of claims 6 to 7 is implemented.
